# EUROPÄISCHE PATENTANMELDUNG

(11) **EP 4 466 974 A1**
(43) Veröffentlichungstag der Anmeldung: **27.11.2024**
(21) Anmeldenummer: 24161927.9
(22) Anmeldetag: 07.03.2024
(51) Int. Cl.: A01D 45/02

(54) **PFLÜCKWALZE**

(30) Priorität: 25.05.2023 DE 102023113790
(71) Anmelder: CLAAS Hungária Kft., 5200 Törökszentmiklós (HU)
(72) Erfinder: Varga-Dudas, Tibor Zsolt, 5600 Bekescsaba (HU); Kucser, Istvan, 5008 Szolnok (HU)
(74) Vertreter: CLAAS Gruppe

(57) **Zusammenfassung**

Die vorliegende Erfindung betrifft eine Pflückwalze (6) für eine Pflückeinheit (4) eines Vorsatzgerätes (1) zum Ernten von stängeligem Erntegut, wobei die zumindest abschnittsweise hohlzylindrisch ausgeführte Pflückwalze (6) einen vorderen, stirnseitig offenen Lagersitz (12) aufweist, in dem eine mehrteilige Lagervorrichtung (13) zur Lagerung eines Lagerwellenabschnitts (14), auf welchem die Pflückwalze (6) drehbar gelagert ist, angeordnet ist, wobei der Lagerwellenabschnitt (14) mittels einer Halterung (15) mit der Pflückeinheit (4) verbunden ist, wobei die Lagervorrichtung (13) auf ihrer der offenen Stirnseite des Lagersitzes (12) abgewandten Seite ein der Entnahme zumindest eines Teils der Lagervorrichtung (13) dienendes Bauteil (19) aufweist, welches nach der Entnahme des Lagerwellenabschnitts (14) zur Aufnahme einer Entnahmevorrichtung eingerichtet ist, sodass das Bauteil (19) gemeinsam mit dem zumindest einen Teil der Lagervorrichtung (13) aus dem Lagersitz (12) entnehmbar ist.

## Beschreibung

Die vorliegende Erfindung betrifft eine Pflückwalze für eine Pflückeinheit eines Vorsatzgerätes zum Ernten von stängeligem Erntegut gemäß dem Oberbegriff des Anspruches 1. Weiterhin ist eine Pflückeinheit eines Vorsatzgerätes Gegenstand der Erfindung.

Eine Pflückwalze für eine Pflückeinheit eines Vorsatzgerätes der eingangs genannten Art ist aus der EP 3 177 131 B1 bekannt. Die darin offenbarte Pflückwalze ist zumindest abschnittsweise hohlzylindrisch ausgeführt und weist einen vorderen, stirnseitig offenen Lagersitz auf. In dem Lagersitz ist eine mehrteilige Lagervorrichtung zur Lagerung eines Lagerwellenabschnitts, auf welcher die Pflückwalze drehbar gelagert ist, angeordnet. Der Lagerwellenabschnitt ist mittels einer Halterung mit der Pflückeinheit drehfest verbunden. Der Lagerwellenabschnitt und die Halterung sind einteilig ausgeführt. Die Pflückwalze ist gegenüber dem Lagerwellenabschnitt mittels der Lagervorrichtung drehbar gelagert und dabei lagepositioniert. Die Lagervorrichtung dient dabei neben der Lagerung von Pflückwalze und Lagerwellenabschnitt auch dem Schutz vor eindringenden Fremdkörpern, wie Schmutz oder Staub sowie Feuchtigkeit. Hierzu ist eine regelmäßige Wartung der Lagervorrichtung erforderlich. Ein weiterer Aspekt ist die aufwendige Montage und Demontage der Lagervorrichtung zu Wartungszwecken.

Ausgehend vom vorstehend genannten Stand der Technik liegt der Erfindung die Aufgabe zugrunde, eine Pflückwalze für eine Pflückeinheit eines Vorsatzgerätes der eingangs genannten Art weiterzubilden, die sich durch einen reduzierten Wartungsaufwand auszeichnet.

Diese Aufgabe wird erfindungsgemäß durch eine Pflückwalze für eine Pflückeinheit eines Vorsatzgerätes mit den Merkmalen des Anspruches gelöst. Vorteilhafte Weiterbildungen sind Gegenstand der abhängigen Ansprüche.

Gemäß dem Anspruch 1 wird eine Pflückwalze für eine Pflückeinheit eines Vorsatzgerätes zum Ernten von stängeligem Erntegut vorgeschlagen, wobei die zumindest abschnittsweise hohlzylindrisch ausgeführte Pflückwalze einen vorderen, stirnseitig offenen Lagersitz aufweist, in dem eine mehrteilige Lagervorrichtung zur Lagerung eines Lagerwellenabschnitts, auf welchem die Pflückwalze drehbar gelagert ist, angeordnet ist, wobei der Lagerwellenabschnitt mittels einer Halterung mit der Pflückeinheit verbunden ist. Erfindungsgemäß ist vorgesehen, dass die Lagervorrichtung auf ihrer der offenen Stirnseite des Lagersitzes abgewandten Seite ein der Entnahme zumindest eines Teils der Lagervorrichtung dienendes Bauteil aufweist, welches nach der Entnahme des Lagerwellenabschnitts zur Aufnahme einer Entnahmevorrichtung eingerichtet ist, sodass das Bauteil gemeinsam mit zumindest einem Teil der Lagervorrichtung aus dem Lagersitz entnehmbar ist.

Durch die gemeinsame Entnahme von zumindest einem Teil der Lagervorrichtung und dem Bauteil mittels der Entnahmevorrichtung, die mit dem Bauteil zusammenwirkt, wird der Wartungsaufwand bei der Montage und Demontage der mehrteiligen Lagervorrichtung vereinfacht. Insbesondere kann dadurch der Austausch von zumindest einem Teil der Lagervorrichtung vereinfacht werden.

Denkbar ist, dass die Halterung und der Lagerwellenabschnitt einstückig ausgeführt sind. Alternativ können die Halterung und der Lagerwellenabschnitt aus zwei Teilen bestehen, die miteinander, vorzugsweise lösbar, verbunden sind.

Hierzu kann das Bauteil als eine Scheibe mit einer zentrisch angeordneten Öffnung ausgebildet sein, wobei sich das Bauteil im Lagersitz an einer axialen Anlagefläche abstützt. Die zentrische Öffnung in der Scheibe kann dem Einführen oder Hindurchführen der Entnahmevorrichtung dienen. Dazu kann die Entnahmevorrichtung beispielsweise als Ausziehwerkzeug ausgeführt sein, welches in der zentrischen Öffnung angesetzt wird. Insbesondere kann das Ausziehwerkzeug abschnittsweise durch die Öffnung hindurchgeführt werden, um die Scheibe zu hintergreifen.

Des Weiteren kann die Scheibe ein U-förmiges Querschnittsprofil aufweisen. Ein sich aufgrund des U-förmigen Querschnittsprofils ausbildender umlaufender Abschnitt der Scheibe erstreckt sich koaxial zur Längsachse des Lagerwellenabschnitts abschnittsweise in Richtung der offenen Stirnseite des Lagersitzes.

Bevorzugt kann die Öffnung der Scheibe ein Innengewinde aufweisen. Das Ausführen der Öffnung mit einem Innengewinde ermöglicht beispielsweise die Verwendung einer Zugschraube als Entnahmevorrichtung.

Insbesondere kann die Lagervorrichtung zumindest zwei Dichtungselemente sowie ein Wälzlager umfassen, welche dem Bauteil vorgeordnet im Lagersitz angeordnet sind. Dabei kann zumindest das Wälzlager als ein Teil der Lagervorrichtung gemeinsam mit dem Bauteil aus dem Lagersitz entnehmbar sein. Vorzugsweise kann das Wälzlager als Pendellager oder als Rillenkugellager ausgeführt sein. Die Ausführung des Wälzlagers als Pendellager bietet den Vorteil des Toleranzausgleichs.

Dabei können zur axialen Beabstandung der zumindest zwei Dichtungselemente jeweils ein Distanzring oder eine Distanzscheibe zwischen diesen angeordnet sein. Bevorzugt sind drei Dichtungselemente vorgesehen, die zueinander durch einen Distanzring oder einen Distanzscheibe zwischen diesen axial beabstandet sind.

Bevorzugt können die zumindest zwei Dichtungselemente als zumindest eine Labyrinthdichtung und zumindest ein Dichtring ausgeführt sein. Die Labyrinthdichtung kann aus einem Metall, Kunststoff, Filz oder einem anderen für die Dicht- und Schmutzabweisungsfunktion geeigneten Material bestehen. Bei einer Ausführung mit zwei Dichtringen können diese entsprechend ihrer Ausgestaltung mit einer Dichtlippe zwei Einbaulagen aufweisen. In einer Einbaulage können die Dichtlippen der Dichtringe einander abgewandt sein. Hier ist die Lagervorrichtung der Pflückwalze wartungsfrei ausgeführt. In einer anderen Einbaulage können die Dichtlippen der Dichtringe in Richtung des Wälzlagers weisen. Die Anordnung der Dichtungen variiert dabei Aufgrund des Aufbaus der Lagervorrichtung der Pflückwalze mit einer Schmiervorrichtung oder ohne Schmiervorrichtung.

Weiterhin kann die zumindest eine Labyrinthdichtung auf ihrer der Halterung zugewandten Seite zumindest einen axialen Vorsprung aufweisen, welcher im Wesentlichen formschlüssig in eine korrespondierende Ausnehmung in der Halterung eingreift. Hierdurch kann die Labyrinthdichtung gegen ein unbeabsichtigtes Mitrotieren mit dem die Labyrinthdichtung übergreifenden Abschnitt des Lagersitzes gesichert werden. Insbesondere kann sich das Wälzlager mit seinem äußeren Lagerring einerseits am Bauteil und andererseits an einem Sicherungsring, der zwischen dem Wälzlager und dem dazu benachbarten Dichtungselement angeordnet ist, abstützen. Insbesondere der umlaufende Abschnitt des als Scheibe ausgeführten Bauteils dient dabei dem äußeren Lagerring als stirnseitige Anlagefläche. Hierdurch ist eine axiale Beabstandung des Wälzlagers zum Bauteil respektive der Scheibe gegeben. Auf der gegenüberliegenden Seite stützt sich der äußere Lagerring an dem Sicherungsring ab. Das Wälzlager stützt sich mit seinem inneren Lagerring an einem radialen Absatz auf dem Lagerwellenabschnitt ab. Die axiale Stirnfläche des radialen Absatzes auf dem Lagerwellenabschnitt liegt im Wesentlichen in einer radialen Ebene mit der Anlagefläche des Sicherungsrings für den äußeren Lagerring.

Gemäß einer Weiterbildung kann auf der der Lagervorrichtung abgewandten Seite des Bauteils ein Stopfen aus einem gummielastischen Material angeordnet sein. Hierdurch kann die Öffnung im Bauteil respektive der Scheibe gegenüber dem Grundkörper der Pflückwalze abgedichtet werden. Dadurch kann die Lagervorrichtung gegenüber der zumindest abschnittsweise hohlzylindrisch ausgeführten Pflückwalze abgedichtet werden.

Gemäß einer Weiterbildung kann die Pflückwalze einen Grundkörper und eine Pflückwalzenspitze aufweisen, die voneinander lösbar sind.

Bevorzugt können der Grundkörper und Pflückwalzenspitze einstückig ausgeführt sein.

Hierbei kann die den Lagerwellenabschnitt und die Lagervorrichtung aufnehmende Pflückwalzenspitze mittels zumindest einen Arretierelementes lösbar an dem Grundkörper befestigt sein.

Dabei kann das zumindest eine sich radial zur Längsachse der Pflückwalze durch den Grundkörper und die Pflückwalzenspitze erstreckende Arretierelement als Bolzen oder Schraube ausgeführt sein.

Gemäß einer bevorzugten Weiterbildung kann in dem Lagerwellenabschnitt ein Schmiermittelkanal ausgebildet sein, durch welchen der Lagervorrichtung, insbesondere der zumindest einen Labyrinthdichtung, Schmiermittel zuführbar ist. Dazu kann sich der Schmiermittelkanal einen sich abschnittweise koaxial zur Längsachse des Lagerwellenabschnitts erstreckenden Kanalabschnitt aufweisen. Am Ende des koaxial verlaufenden Kanalabschnitts zweigt zumindest ein Nebenkanal in radialer Richtung, d.h. senkrecht zur Längsachse des Lagerwellenabschnitts, ab. Der zumindest eine Nebenkanal mündet in einen Ringraum, welcher sich unterhalb des Distanzrings oder der Distanzscheibe, der zwischen der Labyrinthdichtung und dem nachfolgenden Dichtring angeordnet ist, ausbildet. Die Länge des Schmiermittelkanals ist derart gewählt, dass bei einer Ausführung der Lagervorrichtung mit zwei axial beabstandeten Dichtringen der zumindest eine Nebenkanal in den Ringraum zwischen der Labyrinthdichtung und dem unmittelbar zu dieser benachbarten Dichtring mündet.

Die eingangs gestellte Aufgabe wird weiterhin durch eine Pflückeinheit eines Vorsatzgerätes zum Ernten von stängeligem Erntegut, insbesondere eines Maispflückers, gelöst, wobei die Pflückeinheit Pflückwalzen aufweist, die nach zumindest einem der vorangehenden Ansprüche ausgebildet sind. Auf die erfindungsgemäßen Vorteile der Pflückwalze gemäß den Ansprüchen 1 bis 14 darf verwiesen werden.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Vorsatzgerätes zum Ernten von stängeligem Erntegut;
- Fig. 2: schematisch und exemplarisch eine Teilschnittansicht einer erfindungsgemäßen Pflückwalze einer Pflückeinheit; und
- Fig. 3: schematisch und exemplarisch eine Teilschnittansicht zweier Pflückwalzen einer Pflückeinheit gemäß einer Ausführungsform.

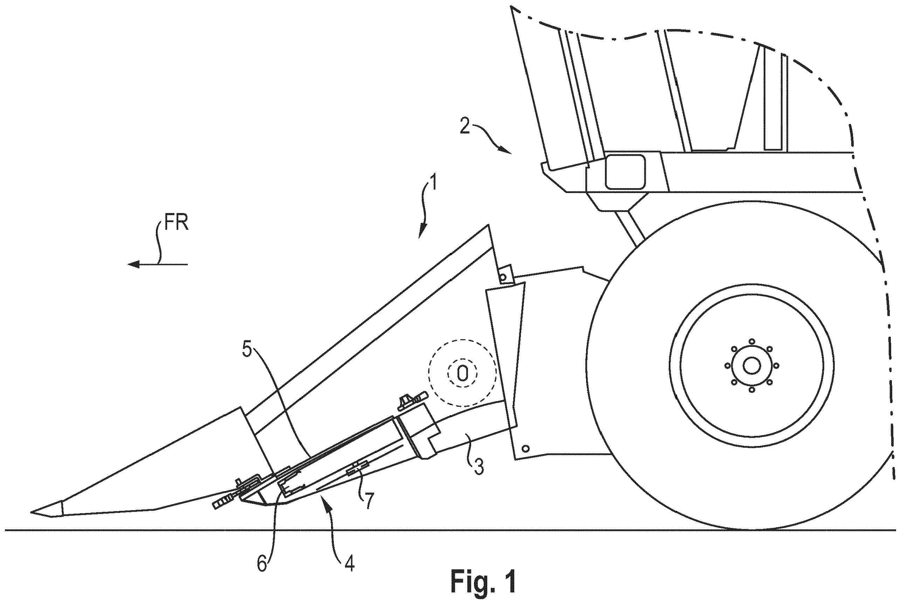

Die Darstellung in Fig. 1 zeigt schematisch ein Vorsatzgerät 1 zum Ernten von stängeligem Erntegut, insbesondere Mais oder dergleichen, die in ihrem rückwärtigen Bereich an einem nicht näher dargestellten Trägerfahrzeug 2, vorzugsweise einem Mähdrescher oder einem Feldhäcksler, adaptiert ist. Das Vorsatzgerät 1 umfasst zumindest eine an einem Rahmenteil 3 angeordnete Pflückeinheit 4.

Die Pflückeinheit 4 weist zwei Pflückplatten 5 auf, die einen Pflückspalt begrenzen. Eine der Pflückplatten 5 ist mittels eines nicht dargestellten Verstellmechanismus verstellbar ausgeführt, während die andere Pflückplatte 5 feststehend angeordnet ist. Die verstellbar ausgeführte Pflückplatte 5 ist hinsichtlich ihres Abstandes zu der feststehenden Pflückplatte 5 zur Variation der Pflückspaltbreite bewegbar. Unterhalb der Pflückplatten 5 sind ein Paar ein- oder mehrteilig ausgeführte zylindrische Pflückwalzen 6 angeordnet. Die Pflückwalzen 6 weisen auf ihrem Umfang Profilsegmente 8 auf, welche dem Einziehen von Erntegut durch den Pflückspalt dienen. Durch einen gegenläufigen Antrieb der Pflückwalzen 6 wird ein von den Profilsegmenten 8 der Pflückwalzen 6 erfasster Halmgutstängel in vertikaler Richtung nach unten eingezogen, wobei im Bereich des Pflückspalts die Fruchtstände vom Halmgutstängel des Erntegutes abgetrennt werden. Dabei erfährt der Halmgutstängel die Verrottung fördernde Deformationen, bleibt aber in seiner stängeligen Form erhalten. Unterhalb der Pflückwalzen 6 kann jedem Pflückspalt eine um eine vertikale Achse umlaufende Häckseleinrichtung 7 zugeordnet sein.

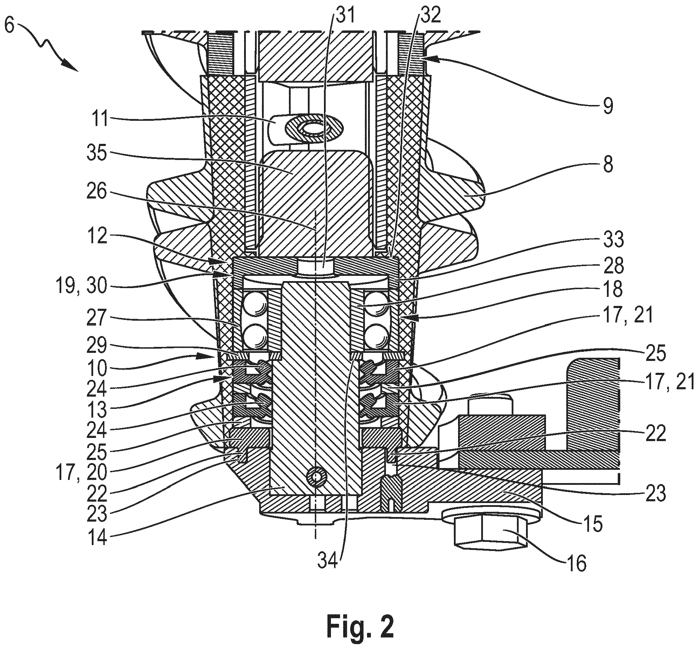

Die Darstellung in Fig. 2 zeigt schematisch und exemplarisch eine Teilschnittansicht einer der erfindungsgemäßen Pflückwalze 6 der Pflückeinheit 4. Die Pflückwalze 6 weist eine als Einzugsschnecke ausgeführte Pflückwalzenspitze 10 auf, die an einem Grundkörper 9 angeordnet ist. Gemäß der in Fig. 2 dargestellten Ausführungsform ist die Pflückwalzenspitze 10 mittels zumindest eines Arretierelementes 11, beispielsweise eines Bolzens oder einer Schraube, lösbar an dem Grundkörper 9 befestigt. Alternativ können der Grundkörper 9 und die Pflückwalzenspitze 10 einstückig ausgeführt oder unlösbar miteinander verbunden sein.

Die zumindest abschnittsweise hohlzylindrisch ausgeführte Pflückwalze 6 weist einen vorderen, stirnseitig offenen Lagersitz 12 auf. In dem Lagersitz 12 eine mehrteilige Lagervorrichtung 13 zur Lagerung eines Lagerwellenabschnitts 14 angeordnet. Auf dem Lagerwellenabschnitt 14 ist die Pflückwalze 6 respektive die Pflückwalzenspitze 10 drehbar gelagert. Der Lagerwellenabschnitt 14 ist mittels einer Halterung 15 mit der Pflückeinheit 4 verbunden. Die Halterung 15 ist mittels Schraubverbindung 16 mit der Pflückeinheit 4 lösbar verbunden. Gemäß einer bevorzugten Ausführung können der Lagerwellenabschnitt 14 und die Halterung 15 einstückig ausgeführt sein. Dadurch wird der Montage- und Demontageaufwand reduziert. Mit Bezugszeichen 26 ist eine Längsachse des Lagerwellenabschnitts 14 bezeichnet.

Die Lagervorrichtung 13 umfasst zumindest zwei Dichtungselemente 17, ein Wälzlager 18 sowie ein Bauteil 19. Die zumindest zwei Dichtungselemente 17, das Wälzlager 18 und das Bauteil 19 sind koaxial zum Lagerwellenabschnitt 14 auf diesem angeordnet. Das zu der Halterung 15 unmittelbar benachbart angeordnete Dichtungselement 17 ist als Labyrinthdichtung 20 ausgeführt. Die Labyrinthdichtung 20 weist auf ihrer der Halterung 15 zugewandten Seite zumindest einen axialen Vorsprung 22 auf, welcher im Wesentlichen formschlüssig in eine jeweils korrespondierende Ausnehmung 23 in der Halterung 15 eingreift. Hier und vorzugsweise weist die Labyrinthdichtung 20 zumindest zwei axiale Vorsprünge 22 auf. Die Labyrinthdichtung 20 kann aus einem Metall, Kunststoff oder dergleichen bestehen. Eine Ausführung mit mehr als zwei Vorsprüngen 22 und korrespondierenden Ausnehmungen 23 ist ebenfalls denkbar.

Der Labyrinthdichtung 20 ist das zumindest eine weitere Dichtungselement 17 nachgeordnet, welches als Dichtring 21 ausgeführt ist. Eine an dem Dichtring 21 angeordnet radiale Dichtlippe 24 weist in Richtung des Bodens des Lagersitzes 12. Hier und vorzugsweise sind zwei Dichtring 21 hintereinander auf dem Lagerwellenabschnitt 14 angeordnet. Zwischen den Dichtungselementen 17 respektive der Labyrinthdichtung 20 und den jeweiligen Dichtringen 21 ist jeweils ein Distanzring 25 angeordnet.

Dem Dichtring 25 ist das Wälzlager 18 nachgeordnet. Das bevorzugt als Kugellager ausgeführte Wälzlager 18 weist einen äußeren Lagerring 27 und einen inneren Lagerring 28 auf. Dem Wälzlager 18 ist das Bauteil 19 nachgeordnet im Lagersitz 12 angeordnet. Das Wälzlager 18 ist vorzugsweise als lebensdauergeschmiertes Wälzlager ausgeführt, sodass es als wartungsfrei angesehen werden kann.

Das Wälzlager 18 stützt sich mit dem äußeren Lagerring 27 einerseits am Bauteil 19 und andererseits an einem Sicherungsring 29, welcher zwischen dem Wälzlager 18 und dem dazu benachbarten Dichtungselement 17 angeordnet ist, ab.

Das Bauteil 19 ist als eine Scheibe 30 mit einer zentrisch angeordneten Öffnung 31 ausgebildet. Das Bauteil 19 stützt sich im Lagersitz 12 an einer axialen Anlagefläche 32 ab. Das als Scheibe 30 ausgeführte Bauteil 19 weist ein U-förmiges Querschnittsprofil auf.

Ein umlaufender Abschnitt 33, der sich koaxial zur Längsachse 26 abschnittsweise in Richtung der offenen Stirnseite des Lagersitz 12 erstreckt, dient dabei dem äußeren Lagerring 27 als stirnseitige Anlagefläche. Hierdurch ist eine axiale Beabstandung des Wälzlagers 18 zum Bauteil 19 respektive der Scheibe 30 gegeben. Auf der gegenüberliegenden Seite stützt sich der äußere Lagerring 27 an dem Sicherungsring 29 ab. Das Wälzlager 18 stützt sich mit seinem inneren Lagerring 28 an einem radialen Absatz 34 auf dem Lagerwellenabschnitt 14 ab. Die axiale Stirnfläche des radialen Absatzes 34 auf dem Lagerwellenabschnitt 14 liegt im Wesentlichen in einer radialen Ebene mit der Anlagefläche des Sicherungsrings 29 für den äußeren Lagerring 27.

Hinter dem Bauteil 19, d.h. auf der der Lagervorrichtung 13 abgewandten Seite des Bauteils 19, ist ein zylindrischer Stopfen 35 aus einem gummielastischen Material angeordnet. Durch den Stopfen kann die Öffnung 31 im Bauteil 19 respektive der Scheibe 30 abgedichtet werden. Dadurch kann die Lagervorrichtung 13 gegenüber der zumindest abschnittsweise hohlzylindrisch ausgeführten Pflückwalze 6 abgedichtet werden.

Dem Bauteil 19 kommt erfindungsgemäß die Funktion zu, das Bauteil 19 gemeinsam mit zumindest einem Teil der Lagervorrichtung 13, hier und vorzugsweise zumindest dem Wälzlager 18, aus dem Lagersitz 12 entnehmen zu können. Hierzu ist, nach der Entnahme zumindest des Lagerwellenabschnitts 14, das Bauteil 19 gemeinsam mit dem zumindest einen Teil der Lagervorrichtung 13 aus dem Lagersitz 12 entnehmbar.

Das Bauteil 19 ist hierzu zur Aufnahme einer Entnahmevorrichtung eingerichtet. Zur Aufnahme der Entnahmevorrichtung, bei der es sich um ein Ausziehwerkzeug handeln kann, ist die Öffnung 31 vorgesehen. Die zentrische Öffnung 31 in dem als Scheibe 30 ausgeführten Bauteil 19 kann dem Einführen oder Hindurchführen der Entnahmevorrichtung dienen. Insbesondere kann eine als Ausziehwerkzeug ausgeführte Entnahmevorrichtung abschnittsweise durch die zentrisch angeordnete Öffnung 31 hindurchgeführt werden, um die Scheibe 30 zu hintergreifen.

Alternativ kann in der Öffnung 31 ein Innengewinde vorgesehen sein. Das Ausführen der Öffnung 31 mit einem Innengewinde ermöglicht beispielsweise die Verwendung einer Zugschraube als Entnahmevorrichtung.

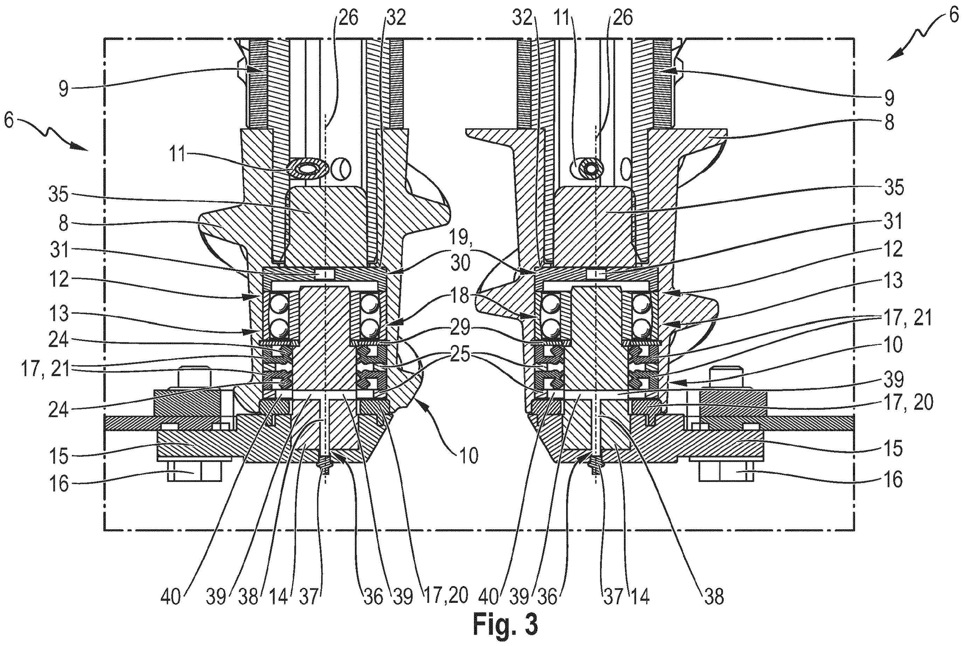

In Fig. 3 ist schematisch und exemplarisch eine Teilschnittansicht zweier Pflückwalzen 6 der Pflückeinheit 4 gemäß einer Ausführungsform dargestellt. Die in Fig. 3 dargestellten Pflückwalzen 6 unterscheiden sich von der in Fig. 2 dargestellten lediglich durch die abweichende Anordnung der Dichtringe 21 sowie dem Vorsehen eines in dem Lagerwellenabschnitt 14 ausgebildeten Schmiermittelkanals 36.

Wie aus Fig. 3 ersichtlich sind die Dichtlippen 24 der Dichtringe 21 in der dargestellten Einbaulage einander abgewandt.

In der anderen Einbaulage, die in Fig. 2 dargestellt ist, weisen beide Dichtlippen 24 der Dichtringe 21 in Richtung des Wälzlagers 18. Die in Fig. 2 dargestellte Einbaulage entspricht einer wartungsfreien Lagervorrichtung 13 der Pflückwalze 6.

Der Schmiermittelkanal 36 kann einen über die Halterung 15 hinausragenden Schmiernippel 37 aufweisen. Bei einer wartungsfreien Ausgestaltung kann der Schmiermittelkanal 36 durch einen Blindstopfen verschlossen sein. Der Schmiermittelkanal 36 weist einen koaxial zur Längsachse 26 des Lagerwellenabschnitts 14 in axialer Richtung verlaufenden Kanalabschnitt 38 auf. Der Kanalabschnitt 38 zweigt in radialer Richtung in zumindest einen Nebenkanalabschnitt 39 ab. Der zumindest eine Nebenkanalabschnitt 39 mündet in einen Ringraum 40, welcher sich unterhalb des Distanzrings 25, der zwischen der Labyrinthdichtung 20 und dem nachfolgenden Dichtring 21 angeordnet ist, ausbildet. Die Länge des Kanalabschnitts 38 des Schmiermittelkanals 36 ist derart gewählt, dass bei einer Ausführung der Lagervorrichtung 13 mit zwei axial zueinander beabstandeten Dichtringen 21 der zumindest eine Nebenkanal 39 in den Ringraum 40 zwischen der Labyrinthdichtung 20 und dem unmittelbar zu dieser benachbarten Dichtring 21 mündet. Hier und vorzugsweise zweigen zwei Nebenkanäle 39 von dem Kanalabschnitt 38 ab. Durch den Schmiermittelkanal 36 kann von außen Schmiermittel bzw. Fett zur Dichtung und als weiterer Schutz vor Feuchtigkeit eingebracht werden.

### Bezugszeichenliste

| | | | |
|---|---|---|---|
| 1 | Vorsatzgerät | 34 | Radialer Absatz |
| 2 | Trägerfahrzeug | 35 | Stopfen |
| 3 | Rahmenteil | 36 | Schmiermittelkanal |
| 4 | Pflückeinheit | 37 | Schmiernippel |
| 5 | Pflückplatten | 38 | Kanalabschnitt |
| 6 | Pflückwalze | 39 | Nebenkanal |
| 7 | Häckseleinrichtung | 40 | Ringraum |
| 8 | Profilsegment | | |
| 9 | Grundkörper | | |
| 10 | Pflückwalzenspitze | | |
| 11 | Arretierelement | | |
| 12 | Lagersitz | | |
| 13 | Lagervorrichtung | | |
| 14 | Lagerwellenabschnitt | | |
| 15 | Halterung | | |
| 16 | Schraubverbindung | | |
| 17 | Dichtungselement | | |
| 18 | Wälzlager | | |
| 19 | Bauteil | | |
| 20 | Labyrinthdichtung | | |
| 21 | Dichtring | | |
| 22 | Axialer Vorsprung | | |
| 23 | Ausnehmung | | |
| 24 | Dichtlippe | | |
| 25 | Distanzring | | |
| 26 | Längsachse | | |
| 27 | Äußere Lagerring | | |
| 28 | Innere Lagerring | | |
| 29 | Sicherungsring | | |
| 30 | Scheibe | | |
| 31 | Öffnung | | |
| 32 | Anlagefläche | | |
| 33 | Abschnitt | | |

## Patentansprüche

1. Pflückwalze (6) für eine Pflückeinheit (4) eines Vorsatzgerätes (1) zum Ernten von stängeligem Erntegut, wobei die zumindest abschnittsweise hohlzylindrisch ausgeführte Pflückwalze (6) einen vorderen, stirnseitig offenen Lagersitz (12) aufweist, in dem eine mehrteilige Lagervorrichtung (13) zur Lagerung eines Lagerwellenabschnitts (14), auf welchem die Pflückwalze (6) drehbar gelagert ist, angeordnet ist, wobei der Lagerwellenabschnitt (14) mittels einer Halterung (15) mit der Pflückeinheit (4) verbunden ist, **dadurch gekennzeichnet, dass** die Lagervorrichtung (13) auf ihrer der offenen Stirnseite des Lagersitzes (12) abgewandten Seite ein der Entnahme zumindest eines Teils der Lagervorrichtung (13) dienendes Bauteil (19) aufweist, welches nach der Entnahme des Lagerwellenabschnitts (14) zur Aufnahme einer Entnahmevorrichtung eingerichtet ist, sodass das Bauteil (19) gemeinsam mit dem zumindest einen Teil der Lagervorrichtung (13) aus dem Lagersitz (12) entnehmbar ist.

2. Pflückwalze (6) nach Anspruch 1, **dadurch gekennzeichnet, dass** das Bauteil (19) als eine Scheibe (30) mit einer zentrisch angeordneten Öffnung (31) ausgebildet ist, wobei sich das Bauteil (19) im Lagersitz (12) an einer axialen Anlagefläche (32) abstützt.

3. Pflückwalze (6) nach Anspruch 2, **dadurch gekennzeichnet, dass** die Scheibe (30) ein U-förmiges Querschnittsprofil aufweist.

4. Pflückwalze (6) nach Anspruch 2 oder 3, **dadurch gekennzeichnet, dass** die Öffnung (31) der Scheibe (30) ein Innengewinde aufweist.

5. Pflückwalze (6) nach einem der Ansprüche 1 bis 4, **dadurch gekennzeichnet, dass** die Lagervorrichtung (13) zumindest zwei Dichtungselemente (17) sowie ein Wälzlager (18) umfasst, welche dem Bauteil (19) vorgeordnet im Lagersitz (12) angeordnet sind.

6. Pflückwalze (6) nach Anspruch 5, **dadurch gekennzeichnet, dass** zur axialen Beabstandung der zumindest zwei Dichtungselemente (17) jeweils ein Distanzring (25) oder eine Distanzscheibe zwischen diesen angeordnet ist.

7. Pflückwalze (6) nach Anspruch 5 oder 6, **dadurch gekennzeichnet, dass** die zumindest zwei Dichtungselemente (17) als zumindest eine Labyrinthdichtung (20) und zumindest ein Dichtring (21) ausgeführt sind.

8. Pflückwalze (6) nach Anspruch 7, **dadurch gekennzeichnet, dass** die zumindest eine Labyrinthdichtung (20) auf ihrer der Halterung (15) zugewandten Seite zumindest einen axialen Vorsprung (22) aufweist, welcher im Wesentlichen formschlüssig in eine korrespondierende Ausnehmung (23) in der Halterung (15) eingreift.

9. Pflückwalze (6) nach einem der Ansprüche 5 bis 8, **dadurch gekennzeichnet, dass** sich das Wälzlager (18) mit seinem äußeren Lagerring (27) einerseits am Bauteil (19) und andererseits an einem zwischen dem Wälzlager (18) und dem dazu benachbarten Dichtungselement (17) angeordneten Sicherungsring (29) abstützt.

10. Pflückwalze (6) nach einem der vorangehenden Ansprüche, **dadurch gekennzeichnet, dass** auf der der Lagervorrichtung (13) abgewandten Seite des Bauteils (19) ein Stopfen (35) aus einem gummielastischen Material angeordnet ist.

11. Pflückwalze (6) nach einem der vorangehenden Ansprüche, **dadurch gekennzeichnet, dass** die Pflückwalze (6) einen Grundkörper (9) und eine Pflückwalzenspitze (10) aufweist, die voneinander lösbar sind.

12. Pflückwalze (6) nach Anspruch 11, **dadurch gekennzeichnet, dass** die den Lagerwellenabschnitt (14) und die Lagervorrichtung (13) aufnehmende Pflückwalzenspitze (10) mittels zumindest einen Arretierelementes (11) lösbar an dem Grundkörper (9) befestigt ist.

13. Pflückwalze (6) nach Anspruch 12, **dadurch gekennzeichnet, dass** das zumindest eine sich radial zur Längsachse (26) der Pflückwalze (6) durch den Grundkörper (9) und die Pflückwalzenspitze (10) erstreckende Arretierelement (11) als Bolzen oder Schraube ausgeführt ist.

14. Pflückwalze (6) nach einem der vorangehenden Ansprüche, **dadurch gekennzeichnet, dass** in dem Lagerwellenabschnitt (14) ein Schmiermittelkanal (36) ausgebildet ist, durch welchen der Lagervorrichtung (13), insbesondere der zumindest einen Labyrinthdichtung (20), Schmiermittel zuführbar ist.

15. Pflückeinheit (4) eines Vorsatzgerätes (1) zum Ernten von stängeligem Erntegut, insbesondere eines Maispflückers, **dadurch gekennzeichnet, dass** die Pflückeinheit (4) Pflückwalzen (6) aufweist, die nach zumindest einem der vorangehenden Ansprüche 1 bis 14 ausgebildet sind.
